# EUROPEAN PATENT APPLICATION

(11) **EP 4 714 762 A1**
(43) Date of publication of application: **25.03.2026**
(21) Application number: 24818415.2
(22) Date of filing: 30.04.2024
(51) Int. Cl.: B60T 13/74

(54) **ELECTRO-MECHANICAL BRAKE CONTAINING PARALLEL-AXIS GEAR TRAIN, AND VEHICLE**

(30) Priority: 05.06.2023 CN 202321416391 U
(71) Applicant: Huawei Digital Power Technologies Co., Ltd., Shenzhen, Guangdong 518043 (CN)
(72) Inventor: LUO, Yuehao, Shenzhen, Guangdong 518043 (CN); NI, Hui, Shenzhen, Guangdong 518043 (CN); HE, Yuhui, Shenzhen, Guangdong 518043 (CN)
(74) Representative: Maiwald GmbH
(86) International application number: PCT/CN2024/090738
(87) International publication number: WO 2024/250881

(57) **Abstract**

This application provides an electro-mechanical brake apparatus including a parallel axis gear system and a vehicle. The electro-mechanical brake apparatus includes a motor, the parallel axis gear system, a planetary gear system, a ball screw, and a brake, where the parallel axis gear system includes a motor gear, a transition gear, and a planetary input gear, the motor and the ball screw are arranged at an interval in a radial direction of the motor, the brake and the parallel axis gear system are arranged opposite to each other in an axial direction of the ball screw, the motor gear and the motor are arranged adjacent to each other in an axial direction of the motor, the planetary input gear and the planetary gear system are arranged adjacent to each other in the axial direction of the ball screw, and the motor gear, the transition gear, and the planetary input gear are sequentially arranged adjacent to each other in the radial direction of the motor. A motor shaft of the motor and the motor gear are coaxial for transmission, the transition gear is engaged with both the motor gear and the planetary input gear, the planetary input gear is connected to the ball screw in a transmission manner through the planetary gear system, and the ball screw drives, with rotation of the planetary input gear, the brake to move in the axial direction of the ball screw. The electro-mechanical brake apparatus in this application has features of a small volume and high transmission efficiency.

## Description

This application claims priority to Chinese Patent Application No. 202321416391.6, filed with the China National Intellectual Property Administration on June 5, 2023, and entitled "ELECTRO-MECHANICAL BRAKE APPARATUS INCLUDING PARALLEL AXIS GEAR SYSTEM AND VEHICLE", which is incorporated herein by reference in its entirety.

### TECHNICAL FIELD

This application relates to the field of vehicle technologies, and in particular, to an electro-mechanical brake apparatus including a parallel axis gear system and a vehicle.

### BACKGROUND

An electro-mechanical brake (electro-mechanical brake, EMB) apparatus uses a motor and a mechanical transmission mechanism in combination, to drive a brake for braking. The electro-mechanical brake apparatus has features such as a simple structure, sensitive response, stable payload transfer, and no need for hydraulic pipes, and has high transfer efficiency. The electro-mechanical brake apparatus can improve safety, maneuverability, and comfort of a vehicle.

Volumes of the brake and the motor are large, and a transmission manner and an arrangement position of the mechanical transmission mechanism need to be properly selected, to compress a volume of the electro-mechanical brake apparatus and save internal space of the vehicle while ensuring transmission efficiency.

### SUMMARY

This application provides an electro-mechanical brake apparatus including a parallel axis gear system and a vehicle. The electro-mechanical brake apparatus has features of a small volume and high transmission efficiency. This application specifically includes the following solutions.

According to a first aspect, this application provides an electro-mechanical brake apparatus including a parallel axis gear system. The electro-mechanical brake apparatus includes a motor, the parallel axis gear system, a planetary gear system, a ball screw, and a brake, the parallel axis gear system includes a motor gear, a transition gear, and a planetary input gear, the motor and the ball screw are arranged at an interval in a radial direction of the motor, the brake and the parallel axis gear system are arranged opposite to each other in an axial direction of the ball screw, the motor gear and the motor are arranged adjacent to each other in an axial direction of the motor, the planetary input gear and the planetary gear system are arranged adjacent to each other in the axial direction of the ball screw, and the motor gear, the transition gear, and the planetary input gear are sequentially arranged adjacent to each other in the radial direction of the motor.

A motor shaft of the motor and the motor gear are coaxial for transmission, the transition gear is engaged with both the motor gear and the planetary input gear, the planetary input gear is connected to the ball screw in a transmission manner through the planetary gear system, and the ball screw drives, with rotation of the planetary input gear, the brake to move in the axial direction of the ball screw.

In the electro-mechanical brake apparatus in this application, the parallel axis gear system, the planetary gear system, and the ball screw are disposed between the motor and the brake as a mechanical transmission mechanism. The ball screw has features of precise transmission and low friction. This can improve transmission efficiency of the electro-mechanical brake apparatus. The motor and the ball screw are disposed side by side in a radial direction of the motor shaft, the ball screw and the planetary gear system are disposed adjacent to each other in the axial direction of the ball screw, and the motor is connected to the planetary gear system in a transmission manner through the parallel axis gear system. The parallel axis gear system is introduced, so that a size of the electro-mechanical brake apparatus in the axial direction of the ball screw is reduced, and radial space of the ball screw is properly used.

Radial sizes of the motor and the ball screw are large. Consequently, a distance between a rotation axis of the motor and a rotation axis of the ball screw is large. In the electro-mechanical brake apparatus in this application, the motor gear, the transition gear, and the planetary input gear are sequentially disposed in the parallel axis gear system, and the motor gear and the planetary input gear are separately engaged through the transition gear, so that power output by the motor can be transferred to the planetary gear system, and sizes of the motor gear and planetary input gear are reduced.

Therefore, the electro-mechanical brake apparatus in this application has features of a small volume and high transmission efficiency.

In an implementation, in the radial direction of the motor, a rotation center of the transition gear coincides with a connection line between a rotation center of the motor gear and a rotation center of the planetary input gear.

In this implementation, the rotation centers of the motor gear, the transition gear, and the planetary input gear are disposed in a same straight line, so that sizes of the motor gear, the transition gear, and the planetary input gear can be reduced, and a volume of the parallel axis gear system is compressed.

In an implementation, the transition gear is slidably connected to a housing of the electro-mechanical brake apparatus, and the transition gear is slidable between the motor gear and the planetary input gear in an arrangement direction of the motor and the ball screw.

In an implementation, the parallel axis gear system includes a first spring, the first spring is elastically connected between the motor shaft and an inner wall of a housing of the electro-mechanical brake apparatus in an arrangement direction of the motor and the ball screw, and the first spring is configured to push the motor shaft to drive the motor gear to move toward the transition gear, to eliminate a gap of the parallel axis gear system.

In an implementation, the parallel axis gear system includes a second spring, the second spring is elastically connected between a gear shaft of the planetary input gear and an inner wall of a housing of the electro-mechanical brake apparatus in an arrangement direction of the motor and the ball screw, and the second spring is configured to push the gear shaft of the planetary input gear to move toward the transition gear, to eliminate a gap of the parallel axis gear system.

In the foregoing three implementations, in consideration of abrasion of the electro-mechanical brake apparatus and reduced transmission efficiency of the parallel axis gear system after the electro-mechanical brake apparatus works for a long time, the transition gear, the motor gear, and the planetary input gear are separately disposed to float relative to the housing of the electro-mechanical brake apparatus. A fitting gap of the parallel axis gear system can be reduced. A transmission efficiency attenuation speed of the parallel axis gear system is slowed down, and a service life of the electro-mechanical brake apparatus is prolonged.

In an implementation, in the axial direction of the motor, the motor gear, the transition gear, and the planetary input gear are flush with each other on a side away from the motor.

In this implementation, the parallel axis gear system is located at one end of the electro-mechanical brake apparatus in the axial direction of the motor. Surfaces of the motor gear, the transition gear, and the planetary input gear that are close to the face of the end are disposed flush with each other, and an overall volume of the electro-mechanical brake apparatus can be reduced.

In an implementation, in the arrangement direction of the motor and the ball screw, a sum of a diameter of the motor and a maximum radius of the planetary gear system is less than or equal to a half of a width size of the brake; or
a sum of a diameter of the motor and a maximum radius of the ball screw is less than or equal to a half of a width size of the brake.

In this implementation, the motor is located on a side of the ball screw, the side-by-side motor and ball screw do not exceed a width of the brake, and an overall volume of the electro-mechanical brake apparatus is compressed.

In an implementation, the ball screw includes balls, a screw, and a screw nut, the screw is connected to the planetary gear system in a transmission manner, the balls are rotatably connected between the screw and the screw nut, and the screw synchronously rotates with the planetary gear system, to drive the screw nut to drive the brake to move in the axial direction of the ball screw.

In this implementation, the balls are disposed between the screw and the screw nut of the ball screw, so that friction in a transmission process of the ball screw can be reduced, and transmission efficiency can be improved.

In an implementation, the electro-mechanical brake apparatus includes a pressure sensor, the pressure sensor is disposed between the screw and an inner wall of a housing of the ball screw in the axial direction of the ball screw, the pressure sensor is communicatively connected to the motor, and the pressure sensor is configured to monitor pressure between the screw and the inner wall of the housing of the ball screw, to adjust a rotation angle of the motor.

In this implementation, the pressure between the ball screw and the inner wall of the housing is monitored, so that braking pressure of the brake can be indirectly monitored. The rotation angle of the motor is adjusted based on the braking pressure of the brake, tire lockup caused by excessive braking power of the brake can be avoided, or a phenomenon such as insufficient braking caused by excessively small braking power of the brake can be avoided.

In an implementation, the ball screw includes a thrust bearing, the thrust bearing is located between the pressure sensor and the inner wall of the housing of the ball screw in the axial direction of the ball screw, and the thrust bearing is configured to reduce friction between the pressure sensor and the inner wall of the housing of the ball screw.

In this implementation, the thrust bearing can reduce friction applied to the pressure sensor, to prolong a service life of the pressure sensor.

In an implementation, the electro-mechanical brake apparatus includes an integrated housing, and the motor, the parallel axis gear system, and the planetary gear system are all accommodated in the integrated housing.

In this implementation, housings of the motor, the parallel axis gear system, and the planetary gear system are disposed in an integrated manner, so that an assembly structure between separate housings is omitted. A quantity of components of the electro-mechanical brake apparatus can be reduced, and an overall volume of the electro-mechanical brake apparatus can be compressed.

In an implementation, the integrated housing includes at least two connecting portions, the at least two connecting portions are located on a periphery of the planetary gear system, and the at least two connecting portions are configured to fasten the integrated housing to a housing of the ball screw.

An arrangement direction of the two connecting portions is perpendicular to the arrangement direction of the motor and the ball screw, and perpendicular to the axial direction of the ball screw.

In this implementation, the two connecting portions are arranged in the direction perpendicular to the arrangement direction of the motor and the ball screw, so that a reliable connection between the integrated housing and the brake can be ensured, and space is reserved for arrangement of the motor and the ball screw.

In an implementation, the brake includes a brake disc, a caliper rack, and two friction pads, the brake disc is fastened to a wheel, the caliper rack is fastened to a frame of a vehicle, the two friction pads are arranged on two opposite sides of the brake disc in the axial direction of the ball screw, the ball screw is slidably connected to the caliper rack and is connected to both the two friction pads in transmission manner, and the two friction pads are driven to approach each other when the ball screw moves in the axial direction, to come into contact with the brake disc and brake the wheel.

In this implementation, the ball screw is configured to convert a rotation motion into a linear motion, and the brake, driven by the ball screw, makes the two friction pads approach each other to come into contact with the brake disc, so that a reliable braking operation on the wheel can be implemented.

In an implementation, the brake further includes a floating caliper body and a slide pin, the floating caliper body is slidably connected to the caliper rack through the slide pin, the ball screw is fastened to one side of the floating caliper body and abuts against one friction pad, the floating caliper body further includes a part that is located on the brake disc and that is away from the ball screw and connected to the other friction pad, and the ball screw moves toward the brake disc and synchronously drives the floating caliper body to move from the other side toward the brake disc, to drive the two friction pads to approach each other and brake the wheel.

In this implementation, the ball screw and the floating caliper body are disposed to separately drive one friction pad to approach the other, so that unidirectional movement of the ball screw can be converted into bidirectional movement of the ball screw and the floating caliper body, and the friction pads are driven to approach each other.

According to a second aspect, this application provides a vehicle, including a wheel and the electro-mechanical brake apparatus provided in any one of the foregoing implementations, where the electro-mechanical brake apparatus is configured to brake the wheel.

The vehicle provided in the second aspect of this application is braked by using the electro-mechanical brake apparatus provided in the first aspect of this application. The electro-mechanical brake apparatus provided in the first aspect of this application has a small volume and high transmission efficiency. This saves internal space of the vehicle in this application and improves reliability of the vehicle.

### BRIEF DESCRIPTION OF DRAWINGS

FIG. 1 is a diagram of outline structures of a brake and a ball screw in an electro-mechanical brake apparatus according to an embodiment of this application;
FIG. 2 is a diagram of exploded structures of a brake and a ball screw in an electro-mechanical brake apparatus according to an embodiment of this application;
FIG. 3 is a diagram of cross-sectional structures of a brake and a ball screw in an electro-mechanical brake apparatus according to an embodiment of this application;
FIG. 4 is a diagram of an outline structure of an electro-mechanical brake apparatus according to an embodiment of this application;
FIG. 5 is a diagram of an arrangement structure of an electro-mechanical brake apparatus according to an embodiment of this application;
FIG. 6 is a diagram of outline structures of a parallel axis gear system and a planetary gear system in an electro-mechanical brake apparatus according to an embodiment of this application;
FIG. 7 is a diagram of a plane structure of a parallel axis gear system in an electro-mechanical brake apparatus according to an embodiment of this application;
FIG. 8 is a diagram of another embodiment of a plane structure of a parallel axis gear system in an electro-mechanical brake apparatus according to an embodiment of this application;
FIG. 9 is a diagram of an outline structure of a side view of an electro-mechanical brake apparatus according to an embodiment of this application;
FIG. 10 is a diagram of a partial exploded structure of an electro-mechanical brake apparatus according to an embodiment of this application;
FIG. 11 is a diagram of a partial cross-sectional structure of an electro-mechanical brake apparatus according to an embodiment of this application;
FIG. 12 is a diagram of a structure of an integrated housing in an electro-mechanical brake apparatus according to an embodiment of this application; and
FIG. 13 is a diagram of a structure of fitting between an integrated housing and a brake in an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In the descriptions of this application, it should be understood that an orientation or a position relationship indicated by the terms "above", "below", "front", "back", "top", "bottom", "inside", "outside", and the like is based on an orientation or a location relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is directly below or obliquely below the second feature, or merely mean that a horizontal height of the first feature is less than that of the second feature.

This application provides an electro-mechanical brake apparatus including a parallel axis gear system. The electro-mechanical brake apparatus includes a motor, the parallel axis gear system, a planetary gear system, a ball screw, and a brake. The parallel axis gear system includes a motor gear, a transition gear, and a planetary input gear. The motor and the ball screw are arranged at an interval in a radial direction of the motor, the brake and the parallel axis gear system are arranged opposite to each other in an axial direction of the ball screw, the motor gear and the motor are arranged adjacent to each other in an axial direction of the motor, the planetary input gear and the planetary gear system are arranged adjacent to each other in the axial direction of the ball screw, and the motor gear, the transition gear, and the planetary input gear are sequentially arranged adjacent to each other in the radial direction of the motor.

A motor shaft of the motor and the motor gear are coaxial for transmission, the transition gear is engaged with both the motor gear and the planetary input gear, the planetary input gear is connected to the ball screw in a transmission manner through the planetary gear system, and the ball screw drives, with rotation of the planetary input gear, the brake to move in the axial direction of the ball screw. The electro-mechanical brake apparatus in this application has features of a small volume and high transmission efficiency.

This application provides a vehicle, including a wheel and the electro-mechanical brake apparatus provided above, where the electro-mechanical brake apparatus is configured to brake the wheel. The electro-mechanical brake apparatus has a small volume and high transmission efficiency. This saves internal space of the vehicle in this application and improves reliability of the vehicle.

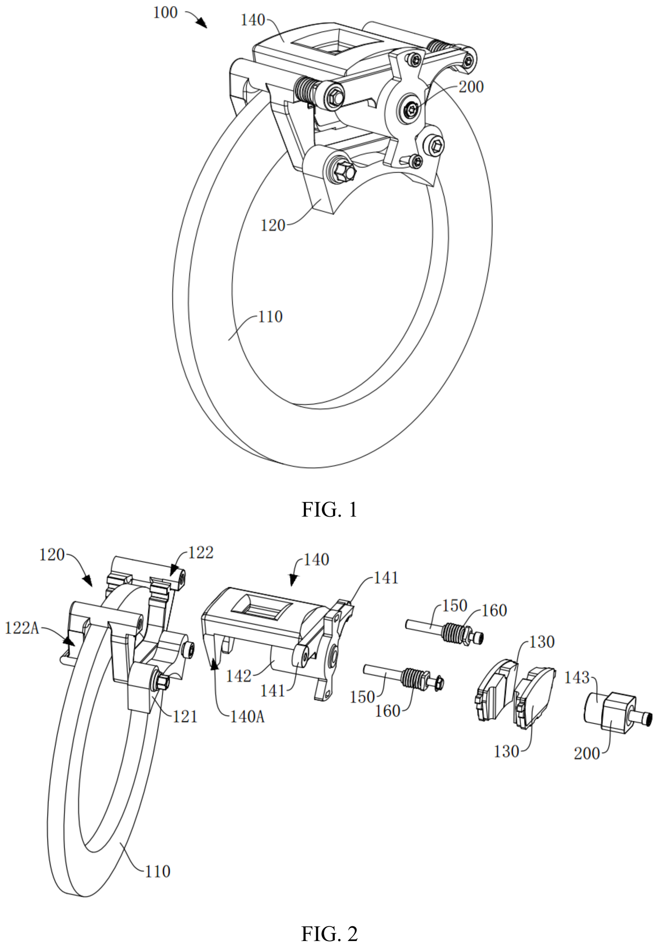

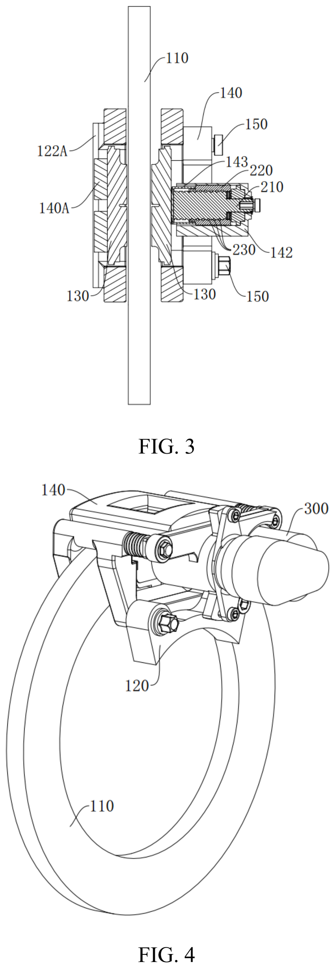

For ease of describing an electro-mechanical brake apparatus in this application, a brake 100 and a ball screw 200 of the electro-mechanical brake apparatus are first described in embodiments of the specification. Specifically, refer to outline structures of the brake 100 and the ball screw 200 shown in FIG. 1 in the electro-mechanical brake apparatus provided in this application, exploded structures of the brake 100 and the ball screw 200 shown in FIG. 2, and cross-sectional structures of the brake 100 and the ball screw 200 shown in FIG. 3.

As shown in FIG. 1 to FIG. 3, the brake 100 includes a brake disc 110, a caliper rack 120, friction pads 130, a floating caliper body 140, and slide pins 150. The ball screw 200 includes a screw 210, a screw nut 220, and balls 230. The brake 100 and the ball screw 200 are arranged adjacent to each other in an axial direction of the ball screw 200 (namely, a rotation axis direction of the screw 210).

The caliper rack 120 of the brake 100 is fastened to a frame of a vehicle, and the brake disc 110 is fastened to a wheel of the vehicle. In a vehicle driving process, the brake disc 110 may rotate with the wheel relative to the caliper rack 120. The caliper rack 120 includes a knuckle 121 and a rack body 122. The knuckle 121 is configured to be fastened to the frame of the vehicle, and the rack body 122 is fastened to the knuckle 121. The rack body 122 further extends in a radial direction of the brake disc 110, and two support legs with through holes are formed on an outer edge of the brake disc 110. The knuckle 121 is located on a side of the brake disc 110 in an axial direction of the brake disc 110, and the through holes of the support legs extend in the axial direction of the brake disc 110.

The floating caliper body 140 is slidably connected to the caliper rack 120 through the slide pins 150. Specifically, there are two slide pins 150, and the two slide pins 150 respectively pass through the through holes of the rack body 122. The floating caliper body 140 includes two support ears 141 with through holes. Each support ear 141 is disposed corresponding to one through hole of the rack body 122 and one slide pin 150. The slide pins 150 further pass through the through holes on the support ears of the floating caliper body 140. That is, the floating caliper body 140 fits the slide pins 150 by using the through holes on the support ears, to achieve a slidable connection to the rack body 122 of the caliper rack 120, and a sliding direction that is of the floating caliper body 140 and that is relative to the caliper rack 120 is parallel to the axial direction of the brake disc 110.

The rack body 122 of the caliper rack 120 further extends in the axial direction of the brake disc 110, and a partial structure (denoted as 122A in FIG. 2) of the rack body 122 is located on a side that is of the brake disc 110 and that is away from the knuckle 121. Correspondingly, the floating caliper body 140 also includes a partial structure (denoted as 140A in FIG. 2) that extends toward a direction away from the support ears in the axial direction of the brake disc 110 and is located on a side that is of the brake disc 110 and that is away from the support ears. A structure on a side that is of the floating caliper body 140 and that is away from the support ears further extends toward a circle center direction of the brake disc 110 in the radial direction of the brake disc 110, so that the structure on the side that is of the floating caliper body 140 and that is away from the support ears at least partially overlaps a disc surface of the brake disc 110.

On a side that is of the floating caliper body 140 and that is close to the knuckle 121, an accommodating portion 142 for accommodating the ball screw 200 is disposed on the floating caliper body 140. The ball screw 200 is accommodated in an inner cavity of the accommodating portion 142. This may also be understood as: a housing of the ball screw 200 and the floating caliper body 140 are disposed as an integrated structure, and the housing of the ball screw 200 is constructed as the accommodating portion 142 of the floating caliper body 140. Because the floating caliper body 140 can slide relative to the caliper rack 120 in the axial direction of the brake disc 110, the ball screw 200 can also synchronously slide, with the floating caliper body 140, relative to the caliper rack 120 in the axial direction of the brake disc 110. In addition, the axial direction of the ball screw 200 is parallel to the axial direction of the brake disc 110.

There are two friction pads 130, and the two friction pads 130 are arranged on opposite sides of the brake disc 110 in the axial direction of the ball screw 200. One of the friction pads 130 is located on a side that is of the brake disc 110 and that is close to the ball screw 200, and the friction pad 130 abuts against the ball screw 200. The other friction pad 130 is located on a side that is of the brake disc 110 and that is away from the ball screw 200, and the friction pad 130 is fastened to a part that is of the floating caliper body 140 and that is away from the ball screw 200.

Inside the ball screw 200, the axial direction of the ball screw 200 may be understood as a rotation axis (namely, a length) direction of the screw 210. That is, the length direction of the screw 210 is parallel to the axial direction of the brake disc 110. One end that is of the screw 210 and that is away from the brake disc 110 abuts against an inner wall of the accommodating portion 142. The balls 230 are connected in a rollable manner between the screw 210 and the screw nut 220. When the screw 210 is driven to rotate around the rotation axis of the screw 210, a rotation action of the screw 210 is transferred to the screw nut 220 through the ball 230, and the screw nut 220 moves in the length direction of the screw 210.

That is, in the electro-mechanical brake apparatus in this application, the ball screw 200 is configured to convert a rotation action into a linear movement action. The balls 230 are connected in a rollable manner between the screw 210 and the screw nut 220. The balls 230 can reduce friction between the screw 210 and the screw nut 220, so that the movement action of the screw nut 220 is smoother, and transmission efficiency of the electro-mechanical brake apparatus is improved.

In the diagram in FIG. 3, the floating caliper body 140 further includes a top cover 143. The top cover 143 fits the accommodating portion 142 to seal the ball screw 200. This prevents external water vapor or impurities from entering an accommodating cavity of the accommodating portion 142, and affecting transmission efficiency of the ball screw 200. The top cover 143 is slidably connected to the accommodating cavity of the accommodating portion 142, and the top cover 143 further abuts against the screw nut 220. When the screw nut 220 slides relative to the accommodating portion 142, the top cover 143 synchronously slides, with the screw nut 220, relative to the accommodating portion 142. On a side that is of the top cover 143 and that is away from the screw nut 220, the top cover 143 abuts against the friction pad 130. That is, the friction pad 130 located on the side that is of the brake disc 110 and that is close to the ball screw 200 abuts against the screw nut 220 of the ball screw 200 by using the top cover 143.

Therefore, when the screw 210 of the ball screw 200 is driven to rotate in a working process of the electro-mechanical brake apparatus in this application, the screw nut 220 is driven to move in the accommodating cavity of the accommodating portion 142. The screw nut 220 moves toward the brake disc 110 in the axial direction of the brake disc 110, and the friction pad 130 located on the same side as that of the screw nut 220 is pushed through the top cover 143 to move toward the brake disc 110. The friction pad 130 may come into contact with an end face of the brake disc 110 and form friction, thereby achieving effect of braking the brake disc 110.

In addition, when the friction pad 130 comes into contact with the end face of the brake disc 110, a pushing force toward a side of the screw nut 220 is formed against the top cover 143. The screw nut 220 pushes the screw 210 to move in a direction away from the brake disc 110, and the screw 210 abuts against the inner wall of the accommodating portion 142 to push the floating caliper body 140 to slide toward a side that is of the brake disc 110 and that is close to the knuckle 121. At the same time, a partial structure that is of the floating caliper body 140 and that is located on the other side of the brake disc 110 synchronously slides toward the knuckle 121, and the friction pad 130 fastened to the other side of the floating caliper body 140 also slides toward the brake disc 110.

The two friction pads 130 approach each other and respectively come into contact with the brake disc 110, to implement a wheel braking function of the electro-mechanical brake apparatus in this application.

In the diagram in FIG. 1, the accommodating portion 142 of the floating caliper body 140 is further provided with a through hole, and an end that is of the screw 210 of the ball screw 200 and that is away from the brake disc 110 is exposed through the through hole of the accommodating portion 142. A transmission mechanism of the electro-mechanical brake apparatus may be connected to the end of the screw 210 in a transmission manner, to drive the screw 210 to rotate in the accommodating portion 142.

In addition, the brake 100 is further provided with springs 160 between the support ears 141 of the floating caliper body 140 and the rack body 122 of the caliper rack 120. The spring 160 is sleeved on the slide pin 150, and two opposite ends of the spring 160 respectively abut against the support ear 141 of the floating caliper body 140 and the rack body 122 of the caliper rack 120. The springs 160 are configured to provide an elastic force to the floating caliper body 140, so that after the floating caliper body 140 slides and moves relative to the caliper rack 120, the floating caliper body 140 is driven to be restored.

In an embodiment, distances between the two support ears 141 of the floating caliper body 140 and the rotation axis of the ball screw 200 are equal to each other. That is, the rotation axis of the ball screw 200 is located at a midpoint position of the brake 100 in a width direction of the brake 100. Such arrangement may enable the ball screw 200 to provide an even pushing force to the floating caliper body 140 when the ball screw 200 moves in the axial direction of the brake disc 110, and the floating caliper body 140 may slide smoothly relative to the caliper rack 120. In a sliding process of the floating caliper body 140, friction between the floating caliper body 140 and the caliper rack 120 is small, and transmission efficiency of the electro-mechanical brake apparatus is improved.

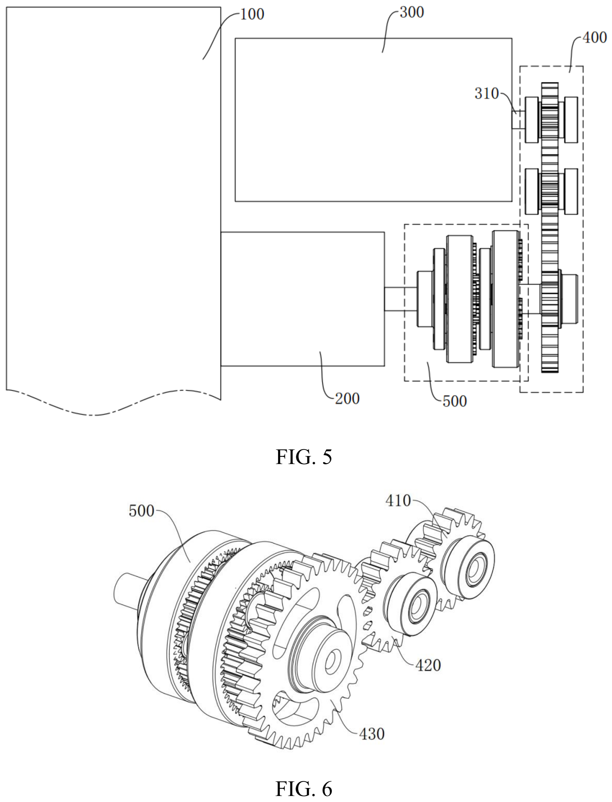

Refer to for a diagram of an outline structure of the electro-mechanical brake apparatus shown in FIG. 4 according to this application, and also refer to a diagram of an arrangement structure of the electro-mechanical brake apparatus shown in FIG. 5.

As shown in FIG. 4 and FIG. 5, the electro-mechanical brake apparatus in this application further includes a motor 300, a parallel axis gear system 400, and a planetary gear system 500. The motor 300 is configured to output power, and the parallel axis gear system 400 and the planetary gear system 500 transfer the power output by the motor 300 to the ball screw 200, to drive the screw 210 of the ball screw 200 to rotate and implement the foregoing wheel braking function of the brake 100.

Specifically, as shown in FIG. 5, an arrangement structure inside the electro-mechanical brake apparatus is as follows: In a radial direction of the motor 300, the motor 300 and the ball screw 200 are arranged at an interval. In the axial direction of the ball screw 200, the brake 100 and the parallel axis gear system 400 are arranged opposite to each other on two sides of the ball screw 200, and the parallel axis gear system 400 and the planetary gear system 500 are arranged adjacent to each other. The planetary gear system 500 is located between the ball screw 200 and the parallel axis gear system 400. Therefore, the parallel axis gear system 400 is arranged in an arrangement direction of the motor 300 and the ball screw 200, and is configured to transfer the power output by rotation of the motor to the planetary gear system 500 in the radial direction of the motor 300, and the planetary gear system 500 then transfers the rotation power to the ball screw 200.

Also refer to a diagram of a structure of the parallel axis gear system 400 shown in FIG. 6. For the electro-mechanical brake apparatus in this application, the parallel axis gear system 400 includes a motor gear 410, a transition gear 420, and a planetary input gear 430. The motor gear 410, the transition gear 420, and the planetary input gear 430 are sequentially arranged adjacent to each other in the arrangement direction of the motor 300 and the ball screw 200. In the axial direction of the motor 300, the motor gear 410 and the motor 300 are arranged adjacent to each other, and a motor shaft 310 of the motor 300 and the motor gear 410 are coaxial for transmission. In the axial direction of the ball screw 200, the planetary input gear 430 and the planetary gear system 500 are arranged adjacent to each other, and the planetary input gear 430 is connected to the ball screw 200 in a transmission manner through the planetary gear system 500. The transition gear 420 is located between the motor gear 410 and the planetary input gear 430, and the transition gear 420 is engaged with both the motor gear 410 and the planetary input gear 430.

Therefore, the motor shaft 310 of the motor 300 drives the motor gear 410 to rotate, the motor gear 410 is engaged with the transition gear 420 and drives the transition gear 420 to rotate, and the transition gear 420 is engaged with the planetary input gear 430 and then drives the planetary input gear 430 to rotate. The planetary input gear 430 drives the planetary gear system 500 to rotate, and the ball screw 200 drives, with the rotation of the planetary input gear 430, the brake 100 to move in the axial direction of the ball screw 200, to achieve the wheel braking function of the electro-mechanical brake apparatus.

In the electro-mechanical brake apparatus in this application, the motor 300 is configured to output the power, and the parallel axis gear system 400 is configured to transfer, in a direction perpendicular to the motor shaft 310 (namely, the arrangement direction of the motor 300 and the ball screw 200), the power output by the motor 300. Because radial sizes of the motor 300 and the ball screw 200 are large, a distance between respective rotation axes of the motor 300 and the ball screw 200 that are disposed side by side is correspondingly large. In the electro-mechanical brake apparatus in this application, a structure of the transition gear 420 is disposed between the motor gear 410 and the planetary input gear 430 in the parallel axis gear system 400, so that power of the motor 300 is transferred to the planetary gear system 500, and sizes of the motor gear 410 and the planetary input gear 430 are reduced. The transition gear 420 in the parallel axis gear system 400 may further improve efficiency of transmission from the motor gear 410 to the planetary input gear 430.

In addition, because an axial size of the motor 300 is large, the motor 300 and the ball screw 200 are disposed side by side, so that axial sizes of the motor 300, the ball screw 200, and the planetary gear system 500 can be reduced. With arrangement of the parallel axis gear system 400, a power transfer trajectory similar to a "U" shape is formed between the motor 300 and the ball screw 200. Therefore, a volume of the electro-mechanical brake apparatus in a direction of the motor shaft 310 is reduced, and radial space of the ball screw 200 is properly utilized.

A pitch circle diameter of the motor gear 410 is smaller than a pitch circle diameter of the planetary input gear 430. The parallel axis gear system 400 achieves a first-stage speed reduction ratio, and the planetary gear system 500 achieves a second-stage speed reduction ratio. In addition, the planetary gear system 500 is compact in structure and can achieve a large speed reduction ratio change. Rotation power output by the motor 300 is transferred to the ball screw 200 through two-stage speed reduction, so that a rotation angle of the screw 210 can be more accurately controlled, and precision of wheel braking by the electro-mechanical brake apparatus can be ensured. The electro-mechanical brake apparatus in this application has features of a small volume and high transmission efficiency. Therefore, internal space is saved and reliability is improved for a vehicle equipped with the electro-mechanical brake apparatus in this application.

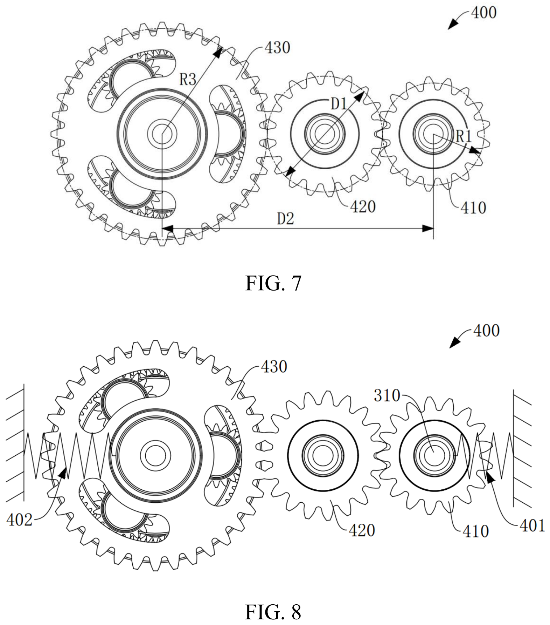

In an embodiment, in the radial direction of the motor 300, a rotation center of the transition gear 420 coincides with a connection line between a rotation center of the motor gear 410 and a rotation center of the planetary input gear 430. Specifically, refer to the diagram in FIG. 7. In the parallel axis gear system 400, the rotation centers of the motor gear 410, the transition gear 420, and the planetary input gear 430 may be located in a same straight line. Such arrangement can reduce a pitch circle size of the transition gear 420, compress an overall size and volume of the parallel axis gear system 400 in the arrangement direction of the motor 300 and the ball screw 200, and facilitate miniaturization of the electro-mechanical brake apparatus.

In an embodiment, the transition gear 420 is slidably connected to a housing of the electro-mechanical brake apparatus, and the transition gear 420 is slidable between the motor gear 410 and the planetary input gear 430 in the arrangement direction of the motor 300 and the planetary gear system 500. Specifically, still refer to FIG. 7. A pitch circle of the motor gear 410 has a first radius R1, a pitch circle of the transition gear 420 has a second diameter D2, and a pitch circle of the planetary input gear 430 has a third radius R3. A distance between a rotation axis of the motor shaft 310 and a center axis of the planetary gear system 500 is D1.

A value of a pitch circle is a product of a module of a gear and a quantity of teeth. A pitch circle may be understood as a circle formed by sequentially connecting meshing center points of meshing teeth in the gear. When pitch circles of two gears are tangent, efficiency of transmission between the two gears is the highest. Therefore, in the parallel axis gear system 400, when the pitch circles of the motor gear 410, the transition gear 420, and the planetary input gear 430 are sequentially tangent, transmission efficiency of the entire parallel axis gear system 400 is the highest. In this case, the following condition is satisfied in the parallel axis gear system 400: D1=D2+R1+R3.

After the electro-mechanical brake apparatus works for a long time, abrasion of the gears may occur. In this case, the pitch circles of the gears accordingly become smaller. As a result, gaps between the gears in the parallel axis gear system 400 increase and the transmission efficiency decreases. In this case, the condition in the parallel axis gear system 400 changes to: D1>D2+R1+R3. That is, the pitch circle diameter D2 of the transition gear 420 is less than a difference between the distance D1 between an axis of the motor shaft 310 and the central axis of the planetary gear system 500 and a sum of the pitch circle radius R1 of the motor gear 410 and the pitch circle radius R3 of the planetary input gear 430.

Further, because a quantity of teeth of the motor gear 410 is less than a quantity of teeth of the planetary input gear 430, an abrasion amount of the motor gear 410 is greater than an abrasion amount of the planetary input gear 430. As a result, a gap between the transition gear 420 and the motor gear 410 is greater than a gap between the transition gear 420 and the planetary input gear 430. In the parallel axis gear system 400, transmission efficiency on a side of the motor gear 410 is lower than transmission efficiency on a side of the planetary input gear 430.

The transition gear 420 is disposed to be slidable between the motor gear 410 and the planetary input gear 430 in the arrangement direction of the motor 300 and the planetary gear system 500. That is, a structure in which the transition gear 420 is floatingly disposed between the motor gear 410 and the planetary input gear 430 is formed. Specifically, at a position at which a gear shaft or bearing of the transition gear 420 fits the housing of the electro-mechanical brake apparatus, a sliding groove may be disposed on the housing of the electro-mechanical brake apparatus in the arrangement direction of the motor 300 and the planetary gear system 500, so that the gear shaft or bearing of the transition gear 420 slides relative to the housing of the electro-mechanical brake apparatus, thereby implementing effect that the transition gear 420 is floatingly disposed between the motor gear 410 and the planetary input gear 430.

Therefore, after the electro-mechanical brake apparatus in this application works for a long time and abrasion of the gears occurs, the transition gear 420 may slide and move toward the motor gear 410, to balance the gap between the motor gear 410 and the transition gear 420 and the gap between the planetary input gear 430 and the transition gear 420, so that the transmission efficiency on the side of the motor gear 410 in the parallel axis gear system 400 is balanced with the transmission efficiency on the side of the planetary input gear 430. This avoids a large decrease in overall transmission efficiency of the parallel axis gear system 400 possibly caused due to a large difference in transmission efficiency of the parallel axis gear system 400.

Refer to FIG. 8. In an embodiment, the parallel axis gear system 400 includes a first spring 401. The first spring 401 is arranged in the arrangement direction of the motor 300 and the ball screw 200, one end of the first spring 401 abuts against the motor shaft 310 of the motor 300, and the other end of the first spring 401 abuts against an inner wall of the housing of the electro-mechanical brake apparatus. That is, the first spring 401 is elastically connected between the motor shaft 310 and the inner wall of the housing of the electro-mechanical brake apparatus. The motor shaft 310 drives, under an elastic force of the first spring 401, the motor gear 410 to deviate toward the transition gear 420, so that a gap between the motor gear 410 and the transition gear 420 can be reduced, and transmission efficiency of the parallel axis gear system 400 can be improved.

It may be understood that, after the electro-mechanical brake apparatus works for a long time and abrasion of the gears occurs, the first spring 401 may push the motor shaft 310 to further drive the motor gear 410 to deviate toward the transition gear 420, to reduce or even eliminate the gap between the motor gear 410 and the transition gear 420, thereby ensuring the transmission efficiency of the parallel axis gear system 400. In an embodiment in which the transition gear 420 is slidably connected to the motor gear 410 and the planetary input gear 430, when the gap between the transition gear 420 and the planetary input gear 430 increases, the first spring 401 may further push the motor gear 410 and the transition gear 420 together to deviate toward the planetary input gear 430, to reduce or even eliminate the gap between the transition gear 420 and the planetary input gear 430, thereby further ensuring the transmission efficiency of the parallel axis gear system 400.

In another embodiment, the parallel axis gear system 400 may further include a second spring 402. The second spring 402 is arranged in the arrangement direction of the motor 300 and the ball screw 200, one end of the second spring 402 abuts against a gear shaft 431 of the planetary input gear 430, and the other end of the second spring 402 abuts against an inner wall of a housing of the electro-mechanical brake apparatus. That is, the second spring 402 is elastically connected between the gear shaft 431 of the planetary input gear 430 and the inner wall of the housing of the electro-mechanical brake apparatus. The gear shaft 431 of the planetary input gear 430 drives, under an elastic force of the second spring 402, the planetary input gear 430 to deviate toward the transition gear 420, so that a gap between the transition gear 420 and the planetary input gear 430 can be reduced, and transmission efficiency of the parallel axis gear system 400 can be improved.

It may be understood that, similar to effect of the first spring 401, the second spring 402 may reduce or even eliminate the gap between the planetary input gear 430 and the transition gear 420 after the electro-mechanical brake apparatus works for a long time and abrasion of the gears occurs. In an embodiment in which the transition gear 420 is slidably connected to the motor gear 410 and the planetary input gear 430, the second spring 402 may further reduce or even eliminate the gap between the transition gear 420 and the motor gear 410. A transmission efficiency attenuation speed of the parallel axis gear system 400 is slowed down, and a service life of the electro-mechanical brake apparatus in this application is prolonged.

Refer to FIG. 5 again. In an embodiment, in the axial direction of the motor 300, the motor gear 410, the transition gear 420, and the planetary input gear 430 are flush with each other on a side away from the motor 300. The parallel axis gear system 400 is located at an end of the electro-mechanical brake apparatus in the axial direction of the motor 300, and the motor gear 410, the transition gear 420, and the planetary input gear 430 in the parallel axis gear system 400 jointly form an end face of the end. The motor gear 410, the transition gear 420, and the planetary input gear 430 are flush with each other on the side away from the motor 300. This facilitates control of an outline size of the electro-mechanical brake apparatus on the end face, and reduces an overall volume of the electro-mechanical brake apparatus.

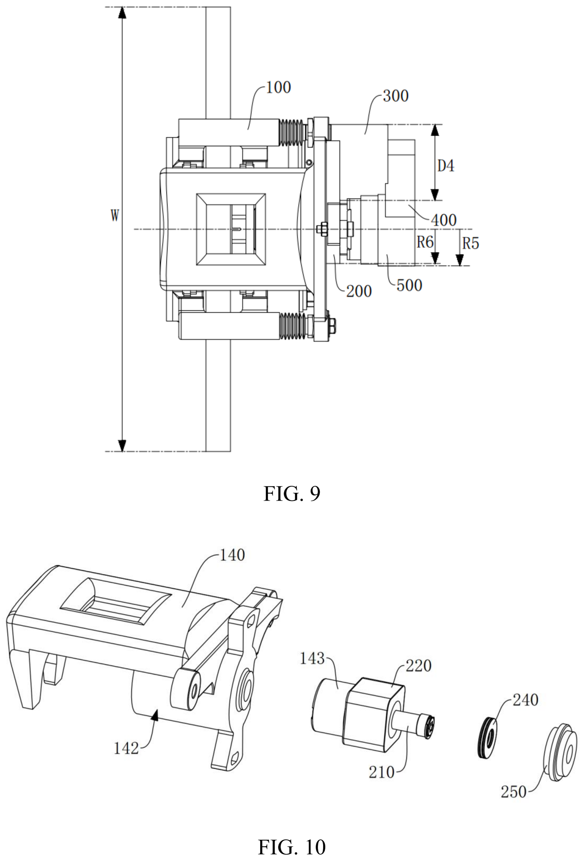

Refer to FIG. 9. In the arrangement direction of the motor 300 and the ball screw 200, the motor 300 has a fourth diameter D4. The planetary gear system 500 has a maximum radius R5 in this direction, and the ball screw 200 has a maximum radius R6 in this direction. Further, the brake 100 has a first width size W in the arrangement direction of the motor 300 and the ball screw 200.

In an embodiment, when the maximum radius R5 of the planetary gear system 500 is greater than the maximum radius R6 of the ball screw 200, the following condition is satisfied: D4+R5≤W/2. That is, a sum of the diameter D4 of the motor 300 and the maximum radius R5 of the planetary gear system 500 is less than or equal to a half of the width size W of the brake 100.

In another embodiment, when the maximum radius R5 of the planetary gear system 500 is less than the maximum radius R6 of the ball screw 200, the following condition is satisfied: D4+R6≤W/2. That is, a sum of the diameter D4 of the motor 300 and the maximum radius R6 of the ball screw 200 is less than or equal to half of the width size W of the brake 100.

In the foregoing two embodiments, outline sizes when the motor 300 and the ball screw 200 are disposed side by side may be controlled to not exceed a width of the brake 100, thereby compressing an overall outline size of the electro-mechanical brake apparatus. Because the ball screw 200 and the planetary gear system 500 are disposed side by side with the motor 300, a maximum size formed when the motor 300 and the ball screw 200 and planetary gear system 500 are arranged is limited to not exceeding a half of the width size W of the brake 100. In this way, an overall volume of the electro-mechanical brake apparatus can be effectively controlled.

In an embodiment, a maximum size formed when the motor 300 and the ball screw 200 and planetary gear system 500 may be limited to not exceeding a half of a width size of the floating caliper body 140. It may be understood that a partial outline size that is of the electro-mechanical brake apparatus and that is fastened to the frame does not exceed a maximum outline size of the brake 100. Because a diameter of the brake disc 110 is large, and the brake disc 110 is fastened to the wheel, the brake disc 110 is in a rotating state relative to a remaining part (fastened relative to the frame) of the electro-mechanical brake apparatus. According to the foregoing limitation, a part that is of the electro-mechanical brake apparatus and that is fastened to the frame may be entirely accommodated inside the wheel, so that a volume of the electro-mechanical brake apparatus in this application can be greatly reduced, and internal space of the vehicle can be saved.

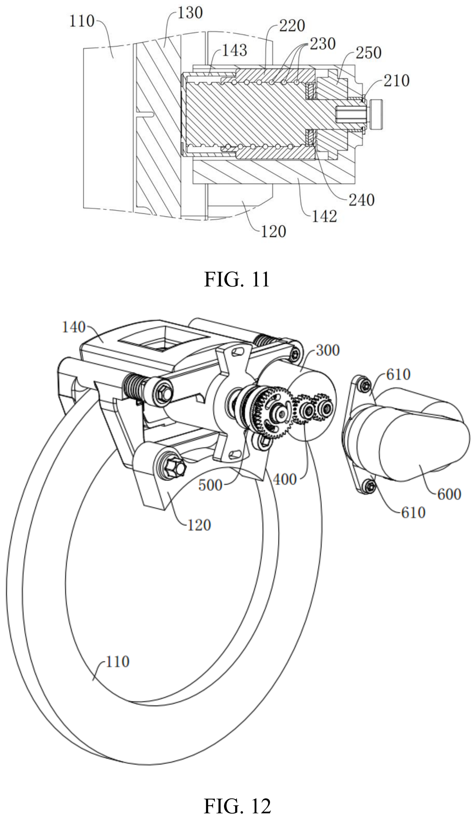

Refer to FIG. 10 and FIG. 11. In an embodiment, the electro-mechanical brake apparatus includes a pressure sensor 240. The pressure sensor 240 and the ball screw 200 are disposed together in the accommodating portion 142 of the floating caliper body 140. In the axial direction of the ball screw 200, the pressure sensor 240 is disposed between the screw 210 and an inner wall of the housing of the ball screw 200. That is, the pressure sensor 240 is disposed between the screw 210 and the inner wall of the accommodating portion 142. The pressure sensor 240 is located on a side that is of the screw 210 and that is away from the brake disc 110. The pressure sensor 240 is configured to monitor pressure between the screw 210 and the inner wall of the housing (namely, the accommodating portion 142) of the ball screw 200.

It may be understood that the pressure of the screw 210 acting on the inner wall of the housing of the ball screw 200 and pressure of the screw nut 220 acting on the friction pad 130 are equal to each other and have opposite directions. A pressure value obtained by the pressure sensor 240 through monitoring may reflect braking pressure on the brake disc 110 in the electro-mechanical brake apparatus in this application. The pressure sensor 240 is communicatively connected to the motor 300. The pressure sensor 240 may transmit, to the motor 300, the pressure value obtained through monitoring, thereby adjusting a rotation angle of the motor 300. The rotation angle of the motor 300 may be used to control an amount by which the ball screw 200 drives the friction pad 130 to move, thereby adjusting braking pressure of the friction pad 130 on the brake disc 110.

In comparison with a solution in which the motor 300 directly rotates by a preset angle to drive the brake 100 to brake the wheel, in this embodiment, the pressure sensor 240 is introduced to feed back real-time braking pressure to the motor 300, so that a system error of the electro-mechanical brake apparatus can be effectively eliminated, to achieve better effect of control on the control power. The pressure sensor 240 can avoid tire lockup caused by excessive braking power of the brake 100, or avoid a phenomenon such as insufficient braking caused by excessively small braking power of the brake 100.

In an embodiment, the ball screw 200 includes a thrust bearing 250. The thrust bearing 250 is also disposed in the accommodating portion 142 of the floating caliper body 140. In the axial direction of the ball screw 200, the thrust bearing 250 is located between the pressure sensor 240 and the inner wall of the housing (namely, the accommodating portion 142) of the ball screw 200. The thrust bearing 250 includes a rotor and a stator that can rotate relative to each other, where the rotor abuts against the pressure sensor 240, and the stator abuts against the inner wall of the housing of the ball screw 200. Friction between the rotor and the stator of the thrust bearing 250 is small during relative rotation. In comparison with a scenario in which the pressure sensor 240 rotates and rubs, relative to the ball screw 200, with the inner wall of the screw 210, the thrust bearing 250 may reduce friction between the pressure sensor 240 and the inner wall of the housing of the ball screw 200, protect the pressure sensor 240, and prolong a service life of the pressure sensor 240.

In an embodiment, the electro-mechanical brake apparatus includes an integrated housing 600, and the motor 300, the parallel axis gear system 400, and the planetary gear system 500 are all accommodated in the integrated housing 600. As shown in FIG. 12, housings of the motor 300, the parallel axis gear system 400, and the planetary gear system 500 are disposed in an integrated manner, so that a connection structure between separate housings can be omitted, and a quantity of components of the electro-mechanical brake apparatus can be reduced. In addition, because there is no need to reserve assembly space for the connection structure between the separate housings, an overall volume of the electro-mechanical brake apparatus is compressed.

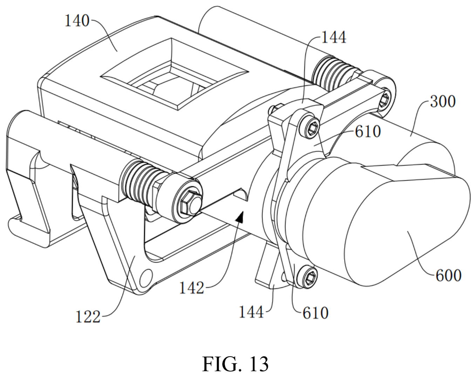

Refer to FIG. 13. In an embodiment, the integrated housing 600 includes at least two connecting portions 610 (there are two connecting portions 610 in FIG. 13). The two connecting portions 610 are located on a periphery of the planetary gear system 500. Correspondingly, the floating caliper body 140 is provided with two fastening portions 144. The two fastening portions are located on a periphery of the ball screw 200. A connecting portion 610 of each integrated housing 600 is disposed corresponding to a fastening portion 144 of the floating caliper body 140 and is close to each other. The two pairs of connecting portions 610 and the fastening portions 144 fit each other and are fastened to each other, to fasten the integrated housing 600 to the housing of the ball screw 200.

An arrangement direction of the two connecting portions 610 is perpendicular to the arrangement direction of the motor 300 and the ball screw 200, and perpendicular to the axial direction of the ball screw 200 at the same time. Because the motor 300 occupies a part of external space of the ball screw 200 and the planetary gear system 500, space of the electro-mechanical brake apparatus in the arrangement direction of the motor 300 and the ball screw 200 is relatively limited. This is not conductive to arrangement of the connecting portion 610 and the fastening portion 144. Therefore, the connecting portion 610 of the integrated housing 600 and the fastening portion 144 of the floating caliper body 140 are disposed perpendicular to the arrangement direction of the motor 300 and the ball screw 200, and perpendicular to the axial direction of the ball screw 200. Internal space of the electro-mechanical brake apparatus can be properly used, a reliable connection between the integrated housing 600 and the brake 100 can be ensured, and space for arrangement of the motor 300 and the ball screw 200 can be reserved.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus, comprising a parallel axis gear system, wherein the electro-mechanical brake apparatus comprises a motor, the parallel axis gear system, a planetary gear system, a ball screw, and a brake, the parallel axis gear system comprises a motor gear, a transition gear, and a planetary input gear, the motor and the ball screw are arranged at an interval in a radial direction of the motor, the brake and the parallel axis gear system are arranged opposite to each other in an axial direction of the ball screw, the motor gear and the motor are arranged adjacent to each other in an axial direction of the motor, the planetary input gear and the planetary gear system are arranged adjacent to each other in the axial direction of the ball screw, and the motor gear, the transition gear, and the planetary input gear are sequentially arranged adjacent to each other in the radial direction of the motor, wherein
a motor shaft of the motor and the motor gear are coaxial for transmission, the transition gear is engaged with both the motor gear and the planetary input gear, the planetary input gear is connected to the ball screw in a transmission manner through the planetary gear system, and the ball screw drives, with rotation of the planetary input gear, the brake to move in the axial direction of the ball screw.

2. The electro-mechanical brake apparatus according to claim 1, wherein in the radial direction of the motor, a rotation center of the transition gear coincides with a connection line between a rotation center of the motor gear and a rotation center of the planetary input gear.

3. The electro-mechanical brake apparatus according to claim 2, wherein the transition gear is slidably connected to a housing of the electro-mechanical brake apparatus, and the transition gear is slidable between the motor gear and the planetary input gear in an arrangement direction of the motor and the ball screw.

4. The electro-mechanical brake apparatus according to claim 2, wherein the parallel axis gear system comprises a first spring, the first spring is elastically connected between the motor shaft and an inner wall of a housing of the electro-mechanical brake apparatus in an arrangement direction of the motor and the ball screw, and the first spring is configured to push the motor shaft to drive the motor gear to move toward the transition gear, to eliminate a gap of the parallel axis gear system.

5. The electro-mechanical brake apparatus according to claim 2, wherein the parallel axis gear system comprises a second spring, the second spring is elastically connected between a gear shaft of the planetary input gear and an inner wall of a housing of the electro-mechanical brake apparatus in an arrangement direction of the motor and the ball screw, and the second spring is configured to push the gear shaft of the planetary input gear to move toward the transition gear, to eliminate a gap of the parallel axis gear system.

6. The electro-mechanical brake apparatus according to any one of claims 1 to 5, wherein in the axial direction of the motor, the motor gear, the transition gear, and the planetary input gear are flush with each other on a side away from the motor.

7. The electro-mechanical brake apparatus according to any one of claims 1 to 5, wherein in the arrangement direction of the motor and the ball screw, a sum of a diameter of the motor and a maximum radius of the planetary gear system is less than or equal to a half of a width size of the brake; or
a sum of a diameter of the motor and a maximum radius of the ball screw is less than or equal to a half of a width size of the brake.

8. The electro-mechanical brake apparatus according to any one of claims 1 to 5, wherein the ball screw comprises balls, a screw, and a screw nut, the screw is connected to the planetary gear system in a transmission manner, the balls are rotatably connected between the screw and the screw nut, and the screw synchronously rotates with the planetary gear system, to drive the screw nut to drive the brake to move in the axial direction of the ball screw.

9. The electro-mechanical brake apparatus according to claim 8, wherein the electro-mechanical brake apparatus comprises a pressure sensor, the pressure sensor is disposed between the screw and an inner wall of a housing of the ball screw in the axial direction of the ball screw, the pressure sensor is communicatively connected to the motor, and the pressure sensor is configured to monitor pressure between the screw and the inner wall of the housing of the ball screw, to adjust a rotation angle of the motor.

10. The electro-mechanical brake apparatus according to claim 9, wherein the ball screw comprises a thrust bearing, the thrust bearing is located between the pressure sensor and the inner wall of the housing of the ball screw in the axial direction of the ball screw, and the thrust bearing is configured to reduce friction between the pressure sensor and the inner wall of the housing of the ball screw.

11. The electro-mechanical brake apparatus according to any one of claims 1 to 5, wherein the electro-mechanical brake apparatus comprises an integrated housing, and the motor, the parallel axis gear system, and the planetary gear system are all accommodated in the integrated housing.

12. The electro-mechanical brake apparatus according to claim 11, wherein the integrated housing comprises at least two connecting portions, the at least two connecting portions are located on a periphery of the planetary gear system, and the at least two connecting portions are configured to fasten the integrated housing to a housing of the ball screw, wherein
an arrangement direction of the two connecting portions is perpendicular to the arrangement direction of the motor and the ball screw, and perpendicular to the axial direction of the ball screw.

13. The electro-mechanical brake apparatus according to any one of claims 1 to 5, wherein the brake comprises a brake disc, a caliper rack, and two friction pads, the brake disc is fastened to a wheel, the caliper rack is fastened to a frame of a vehicle, the two friction pads are arranged on two opposite sides of the brake disc in the axial direction of the ball screw, the ball screw is slidably connected to the caliper rack and is connected to both the two friction pads in a transmission manner, and the two friction pads are driven to approach each other when the ball screw moves in the axial direction, to come into contact the brake disc and brake the wheel.

14. The electro-mechanical brake apparatus according to claim 13, wherein the brake further comprises a floating caliper body and a slide pin, the floating caliper body is slidably connected to the caliper rack through the slide pin, the ball screw is fastened to one side of the floating caliper body and abuts against one friction pad, the floating caliper body further comprises a part that is located on the brake disc and that is away from the ball screw and connected to the other friction pad, and the ball screw moves toward the brake disc and synchronously drives the floating caliper body to move from the other side toward the brake disc, to drive the two friction pads to approach each other and brake the wheel.

15. A vehicle, comprising a wheel and the electro-mechanical brake apparatus according to any one of claims 1 to 14, wherein the electro-mechanical brake apparatus is configured to brake the wheel.
